# EUROPÄISCHE PATENTSCHRIFT

(11) **EP 2 473 393 B1**
(45) Veröffentlichungstag und Bekanntmachung des Hinweises auf die Patenterteilung: **11.02.2015**
(21) Anmeldenummer: 10740652.2
(22) Anmeldetag: 06.08.2010
(51) Int. Cl.: B62D 21/11, B62D 25/08

(54) **FAHRZEUGKAROSSERIE MIT MODULARER HINTERACHSKONSTRUKTION**
VEHICLE CHASSIS HAVING MODULAR REAR AXLE CONSTRUCTION
CARROSSERIE DE VÉHICULE À ENSEMBLE PONT ARRIÈRE MODULAIRE

(30) Priorität: 31.08.2009 DE 102009043913
(43) Veröffentlichungstag der Anmeldung: 11.07.2012
(73) Patentinhaber: ThyssenKrupp Steel Europe AG, 47166 Duisburg (DE); ThyssenKrupp Automotive Systems GmbH, 45145 Essen (DE)
(72) Erfinder: SCHMITZ, Kai, 42929 Wermelskirchen (DE); GRÜNEKLEE, Axel, 47249 Duisburg (DE); SCHULZE-BERGKAMEN, Burkhard, 44287 Dortmund (DE); BRENNEIS, Michael, 66687 Wadern-Dagstuhl (DE)
(74) Vertreter: Cohausz & Florack
(86) Internationale Anmeldenummer: PCT/EP2010/061508
(87) Internationale Veröffentlichungsnummer: WO 2011/023523

(56) Entgegenhaltungen:
- DE-A1-102004 032 808
- DE-A1-102008 062 887
- DE-U1- 20 009 689
- US-A1- 2004 051 292
- US-B1- 6 755 429

## Beschreibung

Die Erfindung betrifft eine Karosserie eines Kraftfahrzeugs mit Längsträgern und einer an die Karosserie angebundenen Hinterachskonstruktion, wobei die Hinterachskonstruktion Mittel zur Befestigung der Hinterachskonstruktion an der Karosserie und eine Federung aufweist, und die Hinterachskonstruktion als Verbundlenkerachse oder als Mehrlenkerachse ausgebildet ist.

Verbundlenkerachsen und Mehrlenkerachsen sind typische Ausführungsformen von Hinterachskonstruktionen eines Kraftfahrzeugs. Beide Hinterachskonstruktionen erfüllen unterschiedliche Anforderungen. Die Verbundlenkerachse stellt eine kostengünstige Radaufhängung zur Verfügung, welche vor allem im Mittel- und Kleinwagenbereich genutzt wird. Sie weist einen geringen Raumbedarf, eine kleine mit dem Rad verbundene Masse sowie günstige Übersetzungen zwischen Rad und Federdämpfern auf. Die Radträger sind an biege- und torsionssteifen Längslenkern befestigt, welche über einen Querträger fest miteinander verbunden sind. Der Querträger ist biegesteif und gleichzeitig torsionsweich ausgelegt, so dass ein eingeschränktes, unabhängiges Einfedern beider Räder ermöglicht wird. Verbundlenkerachsen sind allerdings, von Ausnahmen abgesehen, nicht dafür geeignet, an der Hinterachse ein gleichzeitiges Antriebskonzept zur Verfügung zu stellen, da der Querträger, aber auch die Längsträger, der Verbundlenkerachse in der Regel notwendigen Antriebswellen im Wege stehen. Um vierradgetriebene Fahrzeuge herzustellen, wird bei der Hinterachskonstruktion auf Mehrlenkerachsen zurückgegriffen, welche einerseits höhere Komfortansprüche realisieren können und andererseits zwischen den Hinterrädern ausreichend Platz für den Antrieb bereithalten. Bei der Mehrlenkerachse steuern unterschiedliche Lenker die Spur und den Sturz des Hinterrades während des Radhubes. Mehrlenkerachsen verfügen in der Regel über einen Hilfsrahmen, welcher aus Querträgern und Längsträgern aufgebaut ist und welcher mit der Fahrzeugkarosserie verschraubt ist. Die Anbindungen der Verbundlenkerachse und der Mehrlenkerachse sind üblicherweise verschieden, so dass für jeden Achstyp unterschiedliche Heckbereiche für die Fahrzeugkarosserien hergestellt werden müssen. Dies erfordert, dass der Rohbau der Karosserie noch vor Einbau der Hinterachskonstruktion derart gesteuert werden muss, so dass unterschiedliche Heckbereiche in der Karosserie für die verschiedenen Achstypen bereitgestellt werden.

Um dieses Problem abzustellen, ist beispielsweise aus der deutschen Offenlegungsschrift DE 10 2004 032 808 A1 bekannt, eine Verbundlenkerachse mit einem Fahrschemel, d.h. einem Hilfsrahmen, auszustatten, welcher die Benutzung von Anbindungspunkten einer Karosserie für eine Mehrlenkerachse erlaubt. Mit anderen Worten kann eine kostengünstige Verbundlenkerachse ohne Karosserieänderungen anstelle der für diese Karosserie vorgesehenen Mehrlenkerachse verwendet werden. Problematisch bei der vorgeschlagenen Lösung ist jedoch, dass diese Verbundlenkerachse aufgrund des Hilfsrahmens ein deutlich höheres Gewicht aufweist und gleichzeitig die Kosten zur Herstellung der Verbundlenkerachse deutlich steigen. Dies ist insbesondere deshalb problematisch, da Verbundlenkerachsen üblicherweise in den kostengünstigeren Kraftfahrzeugen verwendet werden und einem hohen Kostendruck unterliegen. Wird für jeden Hinterachstyp eine spezifische Karosserie zur Verfügung gestellt, sind aber die Kosten zur Bereitstellung einer modularen Hinterachskonstruktion ebenfalls hoch.

Des Weiteren ist aus dem Stand der Technik (US 6,755,429 B1) eine Einzelradaufhängung einer Hinterachskonstruktion für ein Kraftfahrzeug bekannt, welche über einen Fahrschemel mittels Halterungen mit der Fahrzeugkarosserie in Verbindung gebracht wird. Der Fahrschemel ist dabei so ausgebildet, dass damit nicht nur eine Einzelradaufhängung, sondern auch eine Mehrlenkerachse mit der Karosserie verbunden werden kann.

Hiervon ausgehend liegt der vorliegenden Erfindung die Aufgabe zugrunde, eine gattungsgemäße Karosserie eines Kraftfahrzeugs mit Hinterachskonstruktion zur Verfügung zu stellen, welche auf kostengünstige Weise ein modulares Hinterachskonzept, d. h. den wahlweisen Einsatz einer Verbundlenkerachse oder einer Mehrlenkerachse, ermöglicht.

Gemäß der Lehre der vorliegenden Erfindung wird die aufgezeigte Aufgabe für eine gattungsgemäße Karosserie eines Kraftfahrzeugs dadurch gelöst, dass die Längsträger Mittel zur Aufnahme der Befestigungsmittel und der Federung einer Verbundlenker- und einer Mehrlenkerachse aufweist, wobei über die Mittel zur Aufnahme der Federung sowohl die Federung einer Verbundlenkerachse als auch einer Mehrlenkerachse aufnehmbar ist, und wobei im Längsträger der Karosserie Federbein-Aufnahmetopf oder Feder-Dämpfer-Aufnahmetopf zur Aufnahme der Federung der Hinterachskonstruktion vorgesehen sind.

Es hat sich gezeigt, dass durch die Bereitstellung von Mitteln zur Aufnahme der Befestigungsmittel einer Verbundlenkerachse und einer Mehrlenkerachse in einer einzigen Fahrzeugkarosserie zusammen mit der Maßnahme, dass die Aufnahme der Federung beider Achstypen identisch ist, einen kostengünstigen modularen Aufbau der Hinterachskonstruktion ermöglicht. Die Fahrzeugkarosserie kann deshalb einheitlich sowohl für den Fahrzeugtyp mit Verbundlenkerachse als auch beispielsweise für den vierradgetriebenen Fahrzeugtyp mit Mehrlenkerachse verwendet werden, ohne dass eine deutliche Gewichtzunahme bei einer der beiden Hinterachskonstruktionen entsteht. Besonders von Vorteil ist, dass der Karosseriebau ungesteuert verlaufen kann und hohe Investitionen für einen gesteuerten Karosserierohbau vermieden werden. Die Entscheidung, ob an der Karosserie eine Verbundlenkerachse als kostengünstige Variante oder eine Mehrlenkerachse montiert wird, muss erst mit Einbau der Hinterachskonstruktion gefällt werden. Der Aufwand und die Kosten zur Bereitstellung verschiedener Achskonzepte hat sich damit deutlich reduziert.

Gemäß einer ersten Ausgestaltung der erfindungsgemäßen Karosserie weist die Karosserie Mittel zur Aufnahme der Befestigungsmittel der Hinterachskonstruktion auf, welche von der Verbundlenker- und von der Mehrlenkerachse verwendbar sind. Dadurch, dass Verbundlenkerachse und Mehrlenkerachse gleichzeitig Mittel zur Aufnahme der Befestigungsmittel der Hinterachskonstruktion der Karosserie verwenden, kann die Anzahl der in der Karosserie bereitgestellten Aufnahmemittel beschränkt werden, was zur Kosteneinsparung beiträgt.

Beispielsweise kann auf zusätzliche karrosserieseitige Aufnahmemittel für die Befestigung von Schubblechen, welche zur Stabilisierung des Hilfsrahmens einer Mehrlenkerachse vorgesehen sind, dadurch verzichtet werden, dass gemäß einer weiteren Ausgestaltung der erfindungsgemäßen Karosserie die Karosserie Mittel zur Aufnahme der Befestigungsmittel einer Verbundlenkerachse aufweist, welche zur Aufnahme von Befestigungsmitteln von Schubblechen verwendbar sind, die zur Stabilisierung des Hilfsrahmens einer Mehrlenkerachse vorgesehen sind.

Eine vereinfachte Befestigung der Verbundlenkerachse an der Karosserie kann gemäß einer nächsten Ausführungsform dadurch gewährleistet werden, dass die Längsträger der Verbundlenkerachse über eine vertikale Lagerung an die Karosserie angebunden sind. Die entsprechenden Aufnahmemittel der Karosserie sind dann nämlich auch in einfacher Weise für die Aufnahme der Befestigungsmittel der Schubbleche geeignet.

Vorzugsweise weist die Karosserie zur Befestigung der Mehrlenkerachse mindestens eine am hinteren Längsträger der Karosserie befestigte Konsole auf. Diese Konsole kann aus mehreren Anbauteilen bestehen. Sie führt zwar bei Einbau der Verbundlenkerachse zu einem leicht erhöhten Gewicht der Karosserie, diese Gewichtszunahme ist aber im Vergleich zu dem aus dem Stand der Technik bekannten Konzept vergleichsweise gering. Ferner stellt die Konsole eine besonders einfache Bereitstellung von Anbindungspunkten für eine Mehrlenkerachse dar, so dass insgesamt die Kosten dieser Karosserievariante aufgrund des nicht gesteuerten Rohbaus besonders gering sind.

Gemäß einer weiteren Ausführungsform der erfindungsgemäßen Karosserie weist die Federung der Hinterachskonstruktion mindestens zwei Federbeine mit integriertem Dämpferelement oder mindestens zwei Federelemente mit separaten Dämpferelementen auf. Die Federbeine mit integriertem Dämpferelement ermöglichen eine platzsparendere Konstruktion der Hinterachse, sind aber kostenintensiver. Die getrennte Ausführung von Federelement und separatem Dämpferelement ist insgesamt kostengünstiger.

Eine besonders einfache Aufnahme der Federung wird erfindungsgemäß dadurch zur Verfügung gestellt, dass im Längsträger der Karosserie Federbein-Aufnahmetopf oder Feder-Dämpfer-Aufnahmetopf zur Aufnahme der Federung der Hinterachskonstruktion vorgesehen sind. Die Feder-Dämpfer-Aufnahmetopf weisen vorzugsweise zwischen der Aufnahme des Federbeins und des Dämpferbeins einen Tiefensprung auf, um die Stabilität des Dämpfer-Aufnahmetopf, welcher aus einer tiefgezogenen Halbschale besteht, zu verbessern.

Es hat sich gezeigt, dass es vorteilhaft ist, das separate Dämpferelement gegenüber dem Federelement in Richtung Fahrzeugfront versetzt anzuordnen. Hierdurch wird eine besonders einfache Möglichkeit geschaffen, die Dämpfer- und Federelementpositionen der unterschiedlichen Hinterachskonstruktionen, d. h. der Verbundlenkerachse und der Mehrlenkerachse, gemeinsam zu nutzen und gleichzeitig eine gute Hinterachskinematik zu erzielen. Gleichzeitig können bei dieser Anordnung der Dämpfer- und Federelemente besonders leicht identische Aufnahmemittel der Fahrzeugkarosserie genutzt werden.

Eine besonders gute Hinterachskinematik lässt sich dadurch erzielen, dass das Dämpferelement vor dem Achsmittelpunkt des jeweiligen Hinterrades und/oder das Federelement hinter dem Achsmittelpunkt des jeweiligen Hinterrades angeordnet ist. Um gleichzeitig den Komfort bei geänderter Position der Feder- und Dämpferelemente zu gewährleisten, ist es gemäß einer nächsten weiteren Ausgestaltung vorteilhaft, dass die Verbundlenkerachse und/oder die Mehrlenkerachse eine vertiefte Lagerung für die Dämpferelemente aufweist. Die vertiefte Lagerung der Dämpferelemente gewährleistet insbesondere einen maximalen Dämpferweg, um eine möglichst komfortable Federung zu ermöglichen. Auch für die vertiefte Lagerung der Dämpfer ergeben sich verbesserte Möglichkeiten bei vor dem Achsmittelpunkt angeordnetem Dämpferelement. Allerdings muss die gewünschte Bodenfreiheit für das Fahrzeug beachtet werden.

Es gibt nun eine Vielzahl von Möglichkeiten, die erfindungsgemäße Karosserie auszugestalten und weiterzubilden. Hierzu wird verwiesen auf die dem Patentanspruch 1 nachfolgenden Patentansprüche sowie auf die Beschreibung von Ausführungsbeispielen in Verbindung mit der Zeichnung. Die Zeichnung zeigt in
- Fig. 1: eine perspektivische Unteransicht einer erfindungsgemäßen Fahrzeugkarosserie ohne Hinterachskonstruktion,
- Fig. 2: in einer perspektivischen Ansicht eine zugehörige Hinterachskonstruktion in Form einer Verbundlenkerachse,
- Fig. 3: in einer perspektivischen Darstellung eine zugehörige Hinterachskonstruktion in Form einer Mehrlenkerachse und
- Fig. 4: eine schematische Schnittansicht des Längsträgers im hinteren Bereich der Fahrzeugkarosserie gemäß Fig. 1.

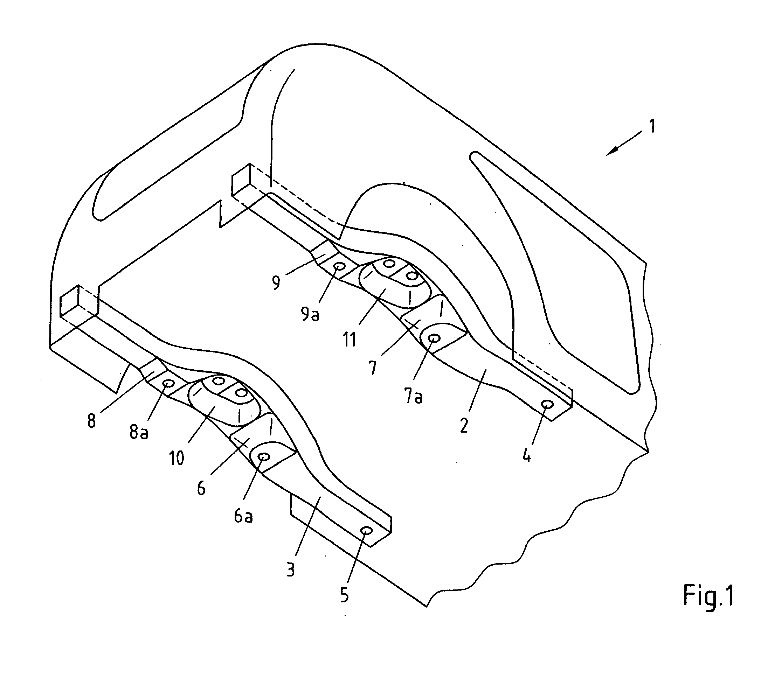

Fig. 1 zeigt nun in einer perspektivischen Darstellung ein Ausführungsbeispiel einer erfindungsgemäßen Karosserie 1 eines Kraftfahrzeugs. Im hinteren Bereich der Fahrzeugkarosserie 1 sind Längsträger 2, 3 vorgesehen, welche Mittel zur Aufnahme der Befestigungsmittel einer Verbundlenker- und einer Mehrlenkerachse 4, 5, 6, 7, 8, 9 aufweisen. Die Mittel zur Aufnahme der Befestigungsmittel einer Verbundlenker- und einer Mehrlenkerachse können beispielsweise, wie in dem dargestellten Ausführungsbeispiel, durch Verschraubungsmöglichkeiten 4, 5 in den Längsträgern 2, 3 ausgebildet sein, welche als Anbindungspunkt für die Verbundlenkerachse oder als Befestigungspunkte für Schubbleche verwendet werden.

Für die Mehrlenkerachse sind an den Längsträgern 2, 3 in Form einer Konsole 6, 7, 8 und 9 Mittel zur Aufnahme der Mehrlenkerachse vorgesehen. Die Mehrlenkerachse, in Fig. 1 nicht dargestellt, verwendet die Anbindungspunkte 6a, 7a, 8a, 9a zur Befestigung des Hilfsrahmens der Mehrlenkerachse. Darüber hinaus weist das erfindungsgemäße Ausführungsbeispiel einer Fahrzeugkarosserie 1 Aufnahmemittel zur Aufnahme der Federung der Verbundlenker- und Mehrlenkerachse auf, welche als Feder-Dämpfer-Aufnahmetöpfe 10, 11 in den Längsträger eingelassen sind. Sie bilden dort eine Art Schottblech, was zu einer deutlichen Versteifung des Längsträgers 2, 3 in diesem Bereich führt. Die Konsole 6, 7, 8, 9 der Fahrzeugkarosserie 1 bleibt an der Fahrzeugkarosserie 1 erhalten, auch wenn eine Verbundlenkerachse 12 montiert wird, welche die durch die Konsole zur Verfügung gestellten Anbindungspunkte nicht benötigt.

Die Verbundlenkerachse verwendet lediglich die Mittel 4, 5 zur Aufnahme der Befestigungsmittel der Verbundlenkerachse sowie die Feder-Dämpfer-Aufnahmetöpfe 10, 11 zur Anbindung. Das zusätzliche Gewicht, welches durch die Bereitstellung der Konsole in der Fahrzeugkarosserie 1 in Kauf genommen wird, und die zusätzlichen Kosten der Fahrzeugkarosserie 1 aufgrund der bereitgestellten Konsole stehen aber in keinem Verhältnis zu der Kostenreduzierung aufgrund des ermöglichten nicht gesteuerten Rohbaus der Karosserie 1, welcher durch die Bereitstellung der Konsole 6, 7, 8, 9 auf einfache Weise erreicht wird. Nicht gesteuert bedeutet, dass der Rohbau der Karosserie 1 bis zur Montage der Hinterachskonstruktion 12, 22 nicht in zwei Wege, einen für eine Karosserie 1 mit Mehrlenkerachse 22 und einen anderen für eine Karosserie 1 mit Verbundlenkerachse 12, aufgeteilt werden muss.

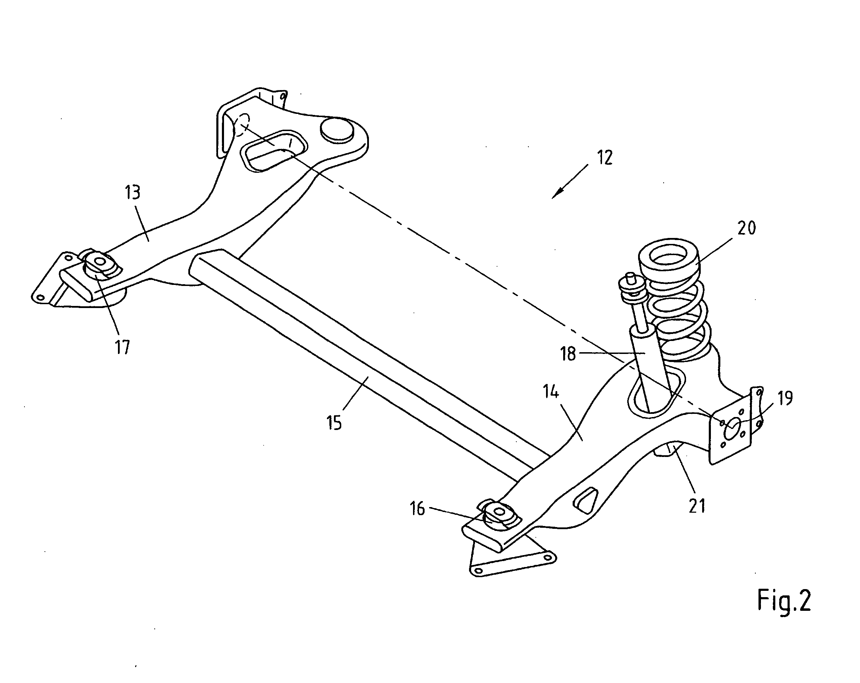

Fig. 2 zeigt in einer perspektivischen Ansicht eine an die Fahrzeugkarosserie 1 angepasste Hinterachskonstruktion in Form einer Verbundlenkerachse 12. Die Längsträger 13, 14 der Verbundlenkerachse sind über einen Querträger 15 miteinander verbunden. Die Längsträger 13, 14 der Verbundlenkerachse 12 sind über eine vertikale Lagerung 16, 17 an die Fahrzeugkarosserie 1 bzw. an deren Längsträger 2,3 befestigt. Wie an dem Ausführungsbeispiel der Verbundlenkerachse 12 zu erkennen ist, ist der Dämpfer 18 vor dem Achsmittelpunkt 19 des jeweiligen Hinterrades angeordnet und das Federelement 20 hinter dem Achsmittelpunkt. Zusammen mit der vertieften Lagerung 21 des Dämpferelements 18 wird eine im Hinblick auf die Fahrdynamik bzw. Hinterachskinematik optimierte Verbundlenkerachse 12 bereitgestellt. Die vertiefte Lagerung des Dämpferelements 18 gewährleistet zusätzlich einen ausreichenden Dämpferweg für erhöhten Komfort.

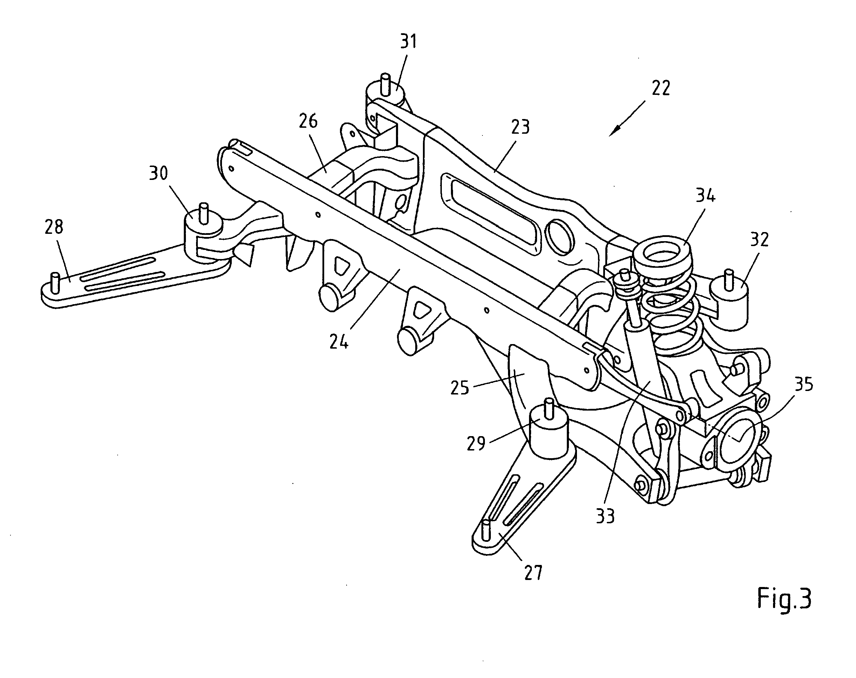

Fig. 3 zeigt in einer perspektivischen Darstellung eine ebenfalls an die Fahrzeugkarosserie 1 angepasste Hinterachskonstruktion in Form einer Mehrlenkerachse 22. Die Mehrlenkerachse 22 besteht aus zwei Querträgern 23, 24, welche durch zwei Längsträger 25, 26 miteinander verbunden sind und den Hilfsrahmen für die Mehrlenkerachse bilden. Die Schubbleche 27, 28 können beispielsweise in der Fahrzeugkarosserie 1 am Längsträger 2, 3 befestigt werden, wo im Falle des Einbaus einer Verbundlenkerachse 12 die horizontale Lagerung der Verbundlenkerachse erfolgt. Der durch die Längs- und Querträger 23, 24, 25, 26 gebildete Hilfsrahmen nutzt die Anbindungspunkte 6a, 7a, 8a und 9a der Fahrzeugkarosserie 1 über deren Anbindungspunkte 29, 30, 31, 32. Somit verwendet die Mehrlenkerachse auch Aufnahmemittel, welche durch die Fahrzeugkarosserie 1 für die Verbundlenkerachse 12 bereitgestellt werden.

Wie in dem vorliegenden Ausführungsbeispiel in Fig. 3 dargestellt, ist das Dämpferelement 33 vor dem Achsmittelpunkt 35 des Hinterrades angeordnet. Das Federelement 34 ist schließlich hinter dem Achsmittelpunkt 35 angeordnet, so dass eine optimierte Hinterachskinematik erzielt wird. Beide Feder- und Dämpferelemente 33, 34 nutzen zur Anbindung an die Fahrzeugkarosserie 1 die kombinierten Feder-Dämpfer-Aufnahmetöpfe 10, 11 des in Fig. 1 dargestellten Ausführungsbeispiels einer Fahrzeugkarosserie 1. In den Figuren 2 und 3 ist der Einfachheit halber nur einseitig ein Feder- und Dämpferelementpaar dargestellt. Selbstverständlich muss eine entsprechende Anordnung auch auf der gegenüberliegenden Seite vorgesehen sein. Auch in Fig. 3 ist zu erkennen, dass die Lagerung des Dämpferelements 33 gegenüber der Lagerung des Federelements 34 vertieft vorgesehen ist, um den Dämpferweg entsprechend groß zu halten.

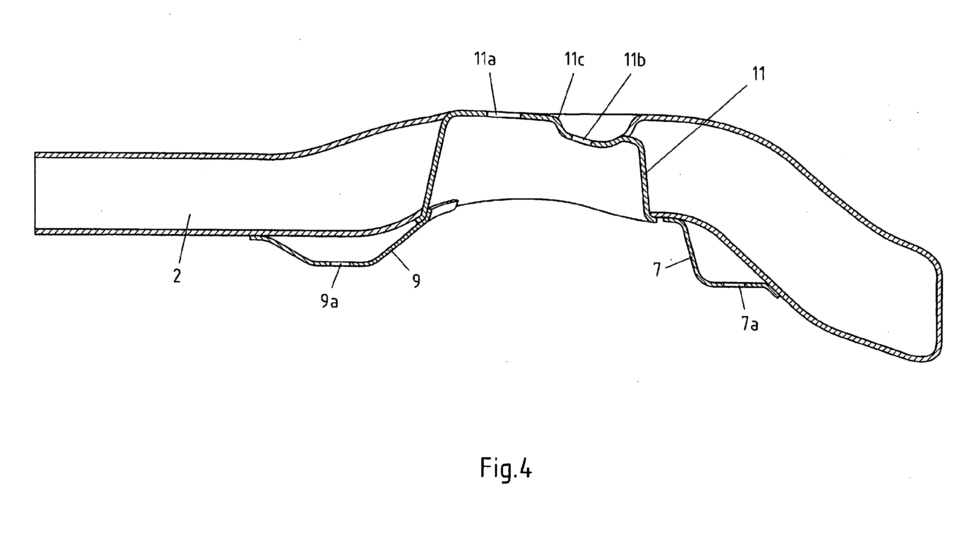

Fig. 4 zeigt nun in einer Schnittansicht den Aufbau des hinteren Längsträgers 2 der Fahrzeugkarosserie aus Fig. 1. Zu erkennen ist einerseits der Längsträger 2, welcher durchgehend von der Mitte bis zum Heck des Fahrzeugs ausgebildet ist. Zur Anbindung des Hilfsrahmens der Mehrlenkerachse sind Teile der Konsole 7, 9 in Fig. 4 dargestellt. Die Aufnahmepunkte 7a und 9a dienen zur Befestigung der Konsole in den Punkten 30 und 31. Der in den Längsträger 2 eingelassene Feder-Dämpfer-Aufnahmetopf 11 weist einen Bereich 11b auf, welcher zur Aufnahme des Dämpferelements 18, 33 vorgesehen ist. Das Federelement 20, 34 der Verbundlenkerachse 12 oder der Mehrlenkerachse 22 wird im Bereich 11a des Feder-Dämpfer-Aufnahmetopf 11 aufgenommen. Zwischen beiden Bereichen ist eine Stufe 11c vorgesehen, welche zur Aussteifung der Struktur des Aufnahmetopfs 11 dient. Wie man auch aus Fig. 4 erkennen kann, ist der Feder-Dämpfer-Aufnahmetopf 11 wie ein Schottblech in den Längsträger 2 eingelassen, so dass eine aussteifende Wirkung durch den Aufnahmetopf 11 im Längsträger 2 erzielt wird.

Das Ausführungsbeispiel der erfindungsgemäßen Fahrzeugkarosserie 1 mit den zugehörigen Achskonstruktionen 12, 22 zeigt, dass es möglich ist, eine Fahrzeugkarosserie bereitzustellen, welche mit geringem Aufwand eine modulare Hinterachskonstruktion bereitstellt, so dass ein nicht gesteuerter Rohbau der Karosserie erreicht werden kann. Dies senkt die Kosten für die Bereitstellung zusätzlicher Varianten an Antrieben und Hinterachskonstruktionen eines Kraftfahrzeugs.

## Patentansprüche

1. Karosserie (1) eines Kraftfahrzeugs mit Längsträgern (2, 3) und einer an die Karosserie angebundenen Hinterachskonstruktion (12, 22), wobei die Hinterachskonstruktion Mittel (16, 17, 27, 28, 29, 30, 31, 32) zur Befestigung der Hinterachskonstruktion (12, 22) an der Karosserie (1) und eine Federung (18, 20, 33, 34) aufweist, und die Hinterachskonstruktion als Verbundlenkerachse (12) oder als Mehrlenkerachse (22) ausgebildet ist,
**dadurch gekennzeichnet, dass** die Längsträger (2, 3) Mittel (4, 5, 6, 7, 8, 9, 10, 11) zur Aufnahme der Befestigungsmittel und der Federung (18, 20, 33, 34) einer Verbundlenker- (12) und einer Mehrlenkerachse (22) aufweist, wobei über die Mittel zur Aufnahme der Federung (18, 20, 33, 34) sowohl die Federung (18, 20, 33, 34) einer Verbundlenkerachse (12) als auch einer Mehrlenkerachse (22) aufnehmbar ist, und wobei im Längsträger (2, 3) der Karosserie Federbein-Aufnahmetopf oder Feder-Dämpfer-Aufnahmetopf (10, 11) zur Aufnahme der Federung (18, 20, 33, 34) der Hinterachskonstruktion (12, 22) vorgesehen sind.

2. Karosserie nach Anspruch 1,
**dadurch gekennzeichnet, dass** die Karosserie Mittel (4, 5) zur Aufnahme der Befestigungsmittel der Hinterachskonstruktion aufweist, welche von der Verbundlenker- (12) und von der Mehrlenkerachse (22) verwendbar sind.

3. Karosserie nach Anspruch 1 oder 2,
**dadurch gekennzeichnet, dass** die Karosserie Mittel (4, 5) zur Aufnahme der Befestigungsmittel einer Verbundlenkerachse aufweist, welche zur Aufnahme von Befestigungsmitteln von Schubblechen (27, 28) verwendbar sind, welche zur Stabilisierung des Hilfsrahmens (23, 24, 25, 26) einer Mehrlenkerachse (22) vorgesehen sind.

4. Karosserie nach einem der Ansprüche 1 bis 3,
**dadurch gekennzeichnet, dass** die Längsträger (13, 14) der Verbundlenkerachse an die Karosserie über eine vertikale Lagerung (16, 17) angebunden sind.

5. Karosserie nach einem der Ansprüche 1 bis 4,
**dadurch gekennzeichnet, dass** die Karosserie (1) zur Befestigung der Mehrlenkerachse (22) mindestens eine am hinteren Längsträger der Karosserie befestigte Konsole (6, 7, 8, 9) aufweist.

6. Karosserie nach einem der Ansprüche 1 bis 5,
**dadurch gekennzeichnet, dass** die Federung der Hinterachskonstruktion (12, 22) mindestens zwei Federbeine mit integriertem Dämpferelement oder mindestens zwei Federelemente (20, 34) mit separaten Dämpferelementen (18, 33) aufweist.

7. Karosserie nach einem der Ansprüche 1 bis 6,
**dadurch gekennzeichnet, dass** das separate Dämpferelement (18, 33) gegenüber dem Federelement (20, 34) in Richtung Fahrzeugfront versetzt angeordnet ist.

8. Karosserie nach einem der Ansprüche 1 bis 7,
**dadurch gekennzeichnet, dass** das Dämpferelement (18, 33) vor dem Achsmittelpunkt (19, 35) des jeweiligen Hinterrades und/oder das Federelement (20, 34) hinter dem Achsmittelpunkt des jeweiligen Hinterrades (19, 35) angeordnet ist.

9. Karosserie nach einem der Ansprüche 1 bis 8,
**dadurch gekennzeichnet, dass** die Verbundlenkerachse (12) und/oder die Mehrlenkerachse (22) eine vertiefte Lagerung (21) für die Dämpferelemente (18, 33) aufweist.

## Claims

1. Bodywork (1) of a motor vehicle comprising side members (2, 3) and a rear axle construction (12, 22) which is connected to the bodywork, the rear axle construction having means (16, 17, 27, 28, 29, 30, 31, 32) for attaching the rear axle construction (12, 22) to the bodywork (1) and having a suspension (18, 20, 33, 34), and the rear axle construction being configured as a torsion-beam axle (12) or as a multi-link axle (22), **characterised in that** the side members (2, 3) have means (4, 5, 6, 7, 8, 9, 10, 11) for receiving the attachment means and the suspension (18, 20, 33, 34) of a torsion-beam axle (12) and of a multi-link axle (22), wherein the suspension (18, 20, 33, 34) of the torsion-beam axle (12) and of the multi-link axle (22) are receivable by the means receiving the suspension (18, 20, 33, 34), and wherein spring strut receiving cups or spring-damper receiving cups (10, 11) are provided in the side member (2, 3) of the bodywork to receive the suspension (18, 20, 33, 34) of the rear axle construction (12, 22).

2. Bodywork according to claim 1, **characterised in that** the bodywork has means (4, 5) for receiving the attachment means of the rear axle construction, which means (4, 5) can be used by the torsion-beam axle (12) and by the multi-link axle (22).

3. Bodywork according to either claim 1 or claim 2, **characterised in that** the bodywork has means (4, 5) for receiving the attachment means of a torsion-beam axle, which means (4, 5) can be used for receiving attachment means of shear plates (27, 28) which are provided to stabilise the subframe (23, 24, 25, 26) of a multi-link axle (22).

4. Bodywork according to any one of claims 1 to 3, **characterised in that** the side members (13, 14) of the torsion-beam axle are connected to the bodywork by a vertical mounting (16, 17).

5. Bodywork according to any one of claims 1 to 4, **characterised in that** for attaching the multi-link axle (22), the bodywork (1) has at least one bracket (6, 7, 8, 9) which is attached to the rear side member of the bodywork.

6. Bodywork according to any one of claims 1 to 5, **characterised in that** the suspension of the rear axle construction (12, 22) has at least two spring struts with an integrated damper element or has at least two spring elements (20, 34) with separate damper elements (18, 33).

7. Bodywork according to any one of claims 1 to 6, **characterised in that** the separate damper element (18, 33) is in an offset arrangement with respect to the spring element (20, 34) in the direction of the front of the vehicle.

8. Bodywork according to any one of claims 1 to 7, **characterised in that** the damper element (18, 33) is arranged upstream of the axial centre (19, 35) of the respective rear wheel and/or the spring element (20, 34) is arranged downstream of the axial centre (19, 35) of the respective rear wheel.

9. Bodywork according to any one of claims 1 to 8, **characterised in that** the torsion-beam axle (12) and/or the multi-link axle (22) has a sunken mounting (21) for the damper elements (18, 33).

## Revendications

1. Carrosserie (1) d'un véhicule avec des longerons (2, 3) et une construction d'essieu arrière (12, 22) reliée à la carrosserie, dans laquelle la construction d'essieu arrière comporte des moyens (16, 17, 27, 28, 29, 30, 31, 32) pour fixer la construction d'essieu arrière (12, 22) à la carrosserie (1) et une suspension (18, 20, 33, 34) et la construction d'essieu arrière est constituée comme essieu semi-rigide (12) ou comme essieu multibras (22),
**caractérisée en ce que** les longerons (2, 3) comportent des moyens (4, 5, 6, 7, 8, 9, 10, 11) destinés à loger des moyens de fixation et la supension (18, 20, 33, 34) d'un essieu semi-rigide (12) ou multibras (22), tant la suspension (18, 20, 33, 34) d'un essieu semi-rigide (12) que d'un essieu multibras (22) pouvant être logée par les moyens destinés à loger la suspension (18, 20, 33, 34) et pots de logement de jambe de suspension ou pots de logement de combiné ressort-amortisseur (10, 11) étant prévues dans le longeron (2, 3) de la carrosserie pour loger la suspension (18, 20, 33, 34) de la construction d'essieu arrière (12, 22).

2. Carrosserie selon la revendication 1 **caractérisée en ce que** la carrosserie comporte des moyens (4, 5) destinés à loger des moyens de fixation de la construction d'essieu arrière qui peuvent être utilisés par l'essieu semi-rigide (12) et l'essieu multibras (22).

3. Carrosserie selon la revendication 1 ou 2 **caractérisée en ce que** la carrosserie comporte des moyens (4, 5) destinés à loger des moyens de fixation d'un essieu semi-rigide qui peuvent être utilisés pour loger des moyens de fixation de tôles coulissantes (27, 28) qui sont prévues pour stabiliser le cadre auxiliaire (23, 24, 25, 26) d'un essieu multibras (22).

4. Carrosserie selon l'une quelconque des revendications 1 à 3 **caractérisée en ce que** les longerons (13, 14) de l'essieu semi-rigide sont reliés à la carrosserie par un logement vertical (16, 17).

5. Carrosserie selon l'une quelconque des revendications 1 à 4 **caractérisée en ce que** la carrosserie (1) comporte au moins une console (6, 7, 8, 9) fixée au longeron arrière de la carrosserie pour fixer l'essieu multibras (22).

6. Carrosserie selon l'une quelconque des revendications 1 à 5 **caractérisée en ce que** la suspension de la construction d'essieu arrière (12, 22) comporte au moins deux jambes de suspension avec élément amortiseur intégré ou au moins deux éléments de suspension (20, 34) avec éléments amortisseurs (18, 33) séparés.

7. Carrosserie selon l'une quelconque des revendications 1 à 6 **caractérisée en ce que** l'élément amortisseur (18, 33) séparé est disposé en face de l'élément de suspension (20, 34) en direction de l'avant du véhicule.

8. Carrosserie selon l'une quelconque des revendications 1 à 7 **caractérisée en ce que** l'élément amortisseur (18, 33) est disposé avant le centre d'essieu (19, 35) de la roue arrière correspondante et/ou l'élément de suspension (20, 34) est disposé derrière le centre d'essieu de la roue arrière correspondante (19, 35).

9. Carrosserie selon l'une quelconque des revendications 1 à 8 **caractérisée en ce que** l'essieu semi-rigide (12) et/ou l'essieu multibras (22) comporte un logement creusé (21) pour les éléments amortisseurs (18, 33).
